# EUROPEAN PATENT SPECIFICATION

(11) **EP 3 404 189 B1**
(45) Date of publication and mention of the grant of the patent: **14.06.2023**
(21) Application number: 16813075.5
(22) Date of filing: 10.11.2016
(51) Int. Cl.: E06B 3/48, E05D 7/10, A01D 46/26

(54) **HINGE BLOCK FOR A DOOR OF AN ENCLOSURE SYSTEM**
SCHARNIERBLOCK FÜR EINE TÜR EINES GEHÄUSESYSTEMS
BLOC CHARNIÈRE POUR PORTE D'UN SYSTÈME DE FERMETURE

(30) Priority: 23.11.2015 ES 201531302 U
(43) Date of publication of application: 21.11.2018
(73) Proprietor: Distribuidora de Sistemas de Cierre, S.L., 29570 Cártama (Málaga) (ES)
(72) Inventor: OÑA GONZÁLEZ, Francisco Javier, 29004 Málaga (ES)
(74) Representative: Balder IP Law, S.L.
(86) International application number: PCT/ES2016/070800
(87) International publication number: WO 2017/089634

(56) References cited:
- WO-A1-2010/028715
- FR-A1- 2 799 226

## Description

### TECHNICAL FIELD

The present invention is encompassed within the construction sector, more specifically in enclosure systems for dividing and closing spaces on terraces, balconies, rooms, etc.

### BACKGROUND OF THE INVENTION

It is known that these enclosure systems are usually formed by a panel assembly supported and guided on rails that are mounted on the ceiling and the floor of the room that is to be enclosed.

In older systems, the different panels, usually made of glass, were hung from the upper rail and moved along this rail with the aid of bearings and gears, which would wear out over time and require maintenance. In addition, the upper rail would eventually undergo deformations due to the weight of the panels.

Patent document ES-2324273-A1 shows an enclosure system with independent panels, which, in this case, move along and are guided on an upper and a lower rail. The weight of each of the panels is evenly and longitudinally distributed along the lower rail, whereby the upper rail serves only as a guide. Each panel can move individually. The enclosure system, in addition to the independent panels, has a door, which is normally the last panel and does not move longitudinally from the retracted position. Otherwise, the door has a configuration, which is similar to the rest of the panels, although it includes a locking system.

Patent document ES-2365575-A1 shows an enclosure system with independent panels, which are also supported on the lower rail, the upper rail being only a guide; this enclosure system presents a number of improvements such as: the design of the rails, which make the system watertight with regard to possible water leakage, or the adjustable lower profiles, which allow a certain margin of error when manufacturing the glass.

The installation of the door in these enclosure systems with independent movable panels is carried out such that the door is inserted and regulated after the entire process of installation of the rest of the panels. Since all the accessories and panels are already mounted, said installation of the door is problematic and usually takes a long time. Document WO2010/028715A1 discloses a hinge block according to the preamble of claim 1.

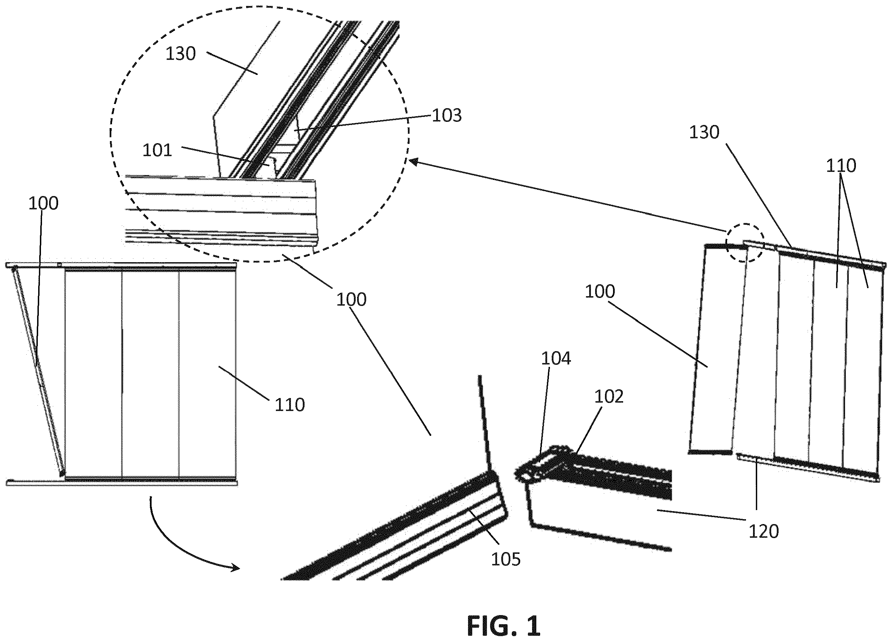

Figure 1 schematically shows how to install a door 100 of an enclosure system in which, as can be seen in the image on the right-hand side of Figure 1, several glass panels 110 are already installed on a lower rail 120 and an upper rail 130. The door 100 will rotate around a vertical rotation shaft, which is embodied in an upper pivot 101 with the corresponding fitting and a lower pivot 102 also with its corresponding fitting. Currently, the door is installed as follows: the upper pivot 101 of the door (already preassembled on the door) is inserted into a block 103 with an orifice so that the door can pivot or swing. This step is shown in the expanded image on the upper left-hand side of Figure 1. The lower left-hand side of Figure 1 shows the already mounted panels 110, and the door 100 inserted into the upper rail 130, with a 90-degree rotation. As shown in the central image of Figure 1, the fitting of the lower pivot 102 is then introduced into another pivot block, identical to the one installed in the upper rail but housed in the lower rail, and the glass panel of the door 100 moves so that it can be coupled to the fitting 104 of the lower pivot 102 of the door. Once the pivots are introduced into the upper and lower blocks, the door is adjusted in the sliding direction of the panels and the installation is completed.

In other words, this system does not physically allow for inserting the upper and lower pivots into the two pivot blocks, so it is always necessary to remove the fittings of one of the pivots of the door in order to be able to install the door. As can be seen in the central image of Figure 1, the lower fitting 104, which comprises the lower pivot 102 is unscrewed from the door 100 and is manually engaged in the lower block, inserted in the lower rail 120. The door 100 (which already has the upper pivot 101 introduced in the upper block 103) is moved manually until said fitting 104 is introduced into the gap of the aluminum of the lower profile 105 of the door, where it is screwed and fastened.

When the lower rail 120 is embedded in the floor, the aforementioned operation of coupling the fitting of the lower pivot 102 of the door 100 to the door itself is especially complicated because there is no physical space for introducing a tool to screw the fitting to the door, which also means that this turns out being a time-consuming phase.

In fact, when the lower rail is embedded, the mounting process of the door is usually carried out in reverse due to this problem involving the lack of space for screwing the fitting of the lower pivot to the door: first the lower pivot of the door is inserted into a single-piece block previously inserted in the lower rail and, subsequently, the mounting of the door in the enclosure system is completed by first introducing the upper pivot into a single-piece block inserted in the upper rail, introducing the fitting of the pivot into the aluminum of the upper profile of the door and finally screwing the fitting to the door.

In addition, in some cases, if the door is not correctly installed, it can become unhinged once the installation is mounted thus causing a threat to people and the installation itself.

It is very important that the installation of the door be simple and safe.

### DESCRIPTION OF THE INVENTION

The invention relates to a hinge block according to claim 1. Preferred embodiments of the hinge block are defined in the dependent claims.

In order to solve the problems posed by existing enclosure systems, the invention proposes a hinge block, which helps mounting the door in enclosure systems with independent movable panels, enabling much easier, safer and cheaper mounting. The block in question consists of two parts: a first main block, which is fastened to the lower rail, in which the door is engaged and pivots, and a second retaining block, which prevents the pivot shaft of the door from moving out of its position, the first main block and the second retaining block being couplable to each other, and once coupled, leaving a gap between them in order to house the rotation or pivot shaft of the door; this gap being preferably cylindrical.

This way, the objective of improving installation time for the door and the safety of said process are achieved: the fittings of the upper and lower pivots of the door are already pre-mounted on the door, and the positioning of the door is carried out by inserting the upper pivot into a standard single-piece hinge block and, subsequently, inserting the lower pivot into the first main block of the hinge block of the invention, which is subsequently closed by coupling the first main block to the second retaining block. These blocks are already inserted and can move around on the inside of the rails of the enclosure system.

The mounting may also be reversed from the way it is described above, that is, the standard single-piece hinge block is inserted in the lower rail and the hinge block of the invention is inserted in the upper rail.

Alternatively, it would be possible that the two blocks used, upper and lower blocks, be two hinge blocks, which are the object of the present invention.

The objective of the invention can be achieved by means of different embodiments of both the first main block and of the second retaining block, as well as the way in which the coupling is carried out between them.

According to the invention the main block has a cavity and the second retaining block has a shape or geometry that is complementary to said cavity, except for the gap, which will house the rotation shaft of the door. This has the advantage that the two blocks can be manufactured with simple geometrical shapes, provided they are complementary, which simplifies manufacturing and lowers costs.

In some embodiments, the main block comprises a through gap and the second retaining block has a geometry that is complementary to said through gap of the main block, except for the gap. This embodiment has the advantage of simplifying the manufacturing of this type of pieces, which can adopt simple geometries.

The first main block and the second retaining block are, in a first alternative of the invention, couplable to each other by male-female coupling, by means of, for example, a protruding element in one of the two blocks and the corresponding ingoing element in the other block.

In any of the embodiments, the coupling between the first main block and the second retaining block can be ensured if the second retaining block comprises at least one hole in which a screw-type or similar fastening element can be inserted, which fastens the coupling between both blocks or the second retaining block to the lower rail.

In a second alternative of the invention, the first main block and the second retaining block have a set of jagged edges, which couple or engage to each other for coupling both blocks.

The first main block and the second retaining block can also couple to each other by fast coupling means, of the snap-fit-type. A third alternative implementation of the coupling or engagement between both blocks is carried out by including at least one tab in the second retaining block and the corresponding notch in the first main block, or vice versa.

The fastening means of the hinge block preferably comprise a through hole in the main block for housing a fastening element to the lower rail of the enclosure system.

The invention also relates to an enclosure system comprising a plurality of panels and at least one door mounted on a lower rail and an upper rail, the door being mounted on the lower rail and/or the upper rail by means a hinge block as defined above.

Another aspect of the invention relates to a method for mounting of a door of an enclosure system comprising a lower rail and an upper rail by means of a hinge block according to claim 7.

The hinge block which is fastened in step i) may be a single-piece standard hinge block or it may also be a hinge block formed by a first main block and a second retaining block as defined in the present invention.

Steps i) and ii) may also be reversed, that is, first fastening the main block of the hinge block in one rail and then fastening another hinge block, which, as indicated above, may be a single-piece standard hinge block or a hinge block according to the invention. In case hinge blocks according to the invention are mounted on both the upper and the lower rails, the first main block of each hinge block is to be inserted first and fastened in each rail; next, a pivot and the second retaining block of that hinge block is coupled, and then the other pivot and the second retaining block of the other hinge block is coupled.

The advantage of this method is that it is not necessary to mount and remove pivot fixings of the door: one of the pivots of the door is inserted into a single-piece hinge block previously inserted either in the upper rail or the lower rail of the enclosure system; the other pivot is then moved on the other rail (in which the single-piece hinge block has not been inserted) until the pivot engages in the hole of the first main block of a hinge block according to the invention, which has previously been fastened to that other rail; and finally the second retaining block is introduced into that same rail and is moved along the rail until it couples to the first main block.

The second retaining block is preferably secured by using some kind of fastening means, such as a screw or similar, thus preventing possible movements of the pivot.

In preferred embodiments of the invention, the hinge block of the invention is placed in the lower rail of the enclosure system; this facilitates the mounting of the door, since it is usually easier to carry out the coupling between the first main block and the second retaining block of the hinge block of the invention, as well as the subsequent screwing of the second retaining block, in case this step is carried out.

Other advantages and additional characteristics of the invention will become apparent from the detailed description that follows and will be particularly indicated in the attached claims.

### BRIEF DESCRIPTION OF THE DRAWINGS

As a complement to the description, and for the purpose of helping to make the characteristics of the invention more readily understandable, in accordance with a practical embodiment thereof, said description is accompanied by a set of figures constituting an integral part thereof, which by way of illustration and not limitation represent the following:
Figure 1 schematically shows how the mounting of a door of an enclosure system is carried out in the state of the art.
Figure 2 shows an exploded view of a hinge block according to a first possible embodiment of the invention.
Figure 3 is a view of the hinge block in Figure 2, once the retaining block is engaged in the main block.
Figure 4 shows an exploded view of a hinge block according to a second possible embodiment of the invention.
Figure 5 is a version of the hinge block in Figure 4 in which a fastening screw is not used.
Figures 6, 7, 8 and 9 show respective exploded views of hinge blocks according to third, fourth and fifth (with two versions) possible embodiments of the invention, respectively.
Figure 10 schematically shows how the mounting of a door of an enclosure system is carried out by means of the hinge block of the present invention.

### DESCRIPTION OF AN EMBODIMENT OF THE INVENTION

As explained in the section on the background of the invention, Figure 1 schematically shows how the mounting of a door of an enclosure system is carried out in the state of the art.

In order to solve the problems that this traditional enclosure system poses when installing the door, the invention presents a hinge block formed by at least two pieces that can couple to each other and which, once coupled, leave a gap in which the rotation shaft of door can be housed.

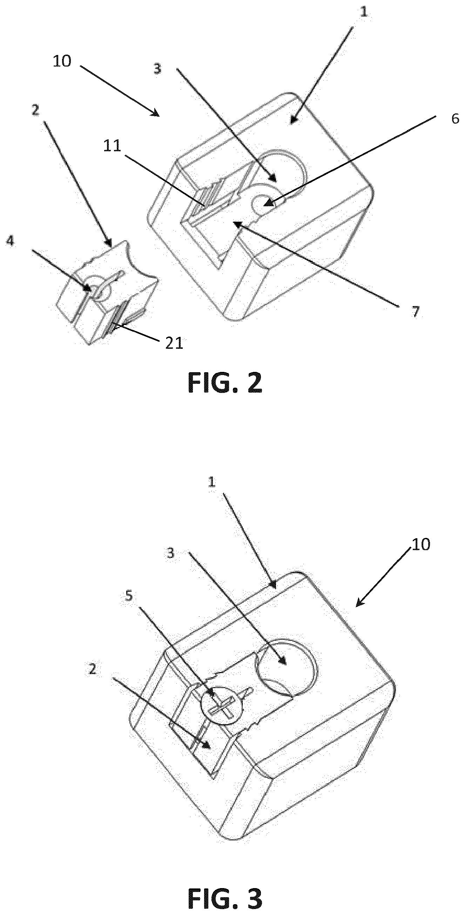

Different possible embodiments of this hinge block are shown in Figures 2-9. Equal elements use the same numerical reference in the different embodiments of the invention.

Figure 2 shows a first embodiment of the hinge block 10 comprising a main block 1 and a retaining block 2. The main block 1 has the shape of a parallelepiped with several gaps, namely, a pivot gap 3 with a partially cylindrical shape and another gap or cavity 7. This cavity serves so that the rotational shaft of the door slides thereon until it is housed in the pivot gap 3, when the retaining block is not yet coupled to the main block 1. The cavity 7 of the main block has a shape that is complementary to that of the retaining block 2. In addition, the main block 1 has jagged elements 11 on the inner side walls of the cavity 7, which are located and have a shape that is complementary to other jagged elements 21 located on the outer walls of the retaining block 2.

Similarly, the main block has a fastening hole 6, through which a screw or similar (not shown in the Figure) is introduced, which is screwed to the lower rail 120 of the enclosure system.

The partially cylindrical gap 3 becomes fully cylindrical when the retaining block 2 is coupled inside the cavity 7, having a complementary shape. The resulting pivot gap 3 is substantially cylindrical.

The hole 6, which is circular, has a radius that is smaller than the radius of the gap 3, which is substantially cylindrical.

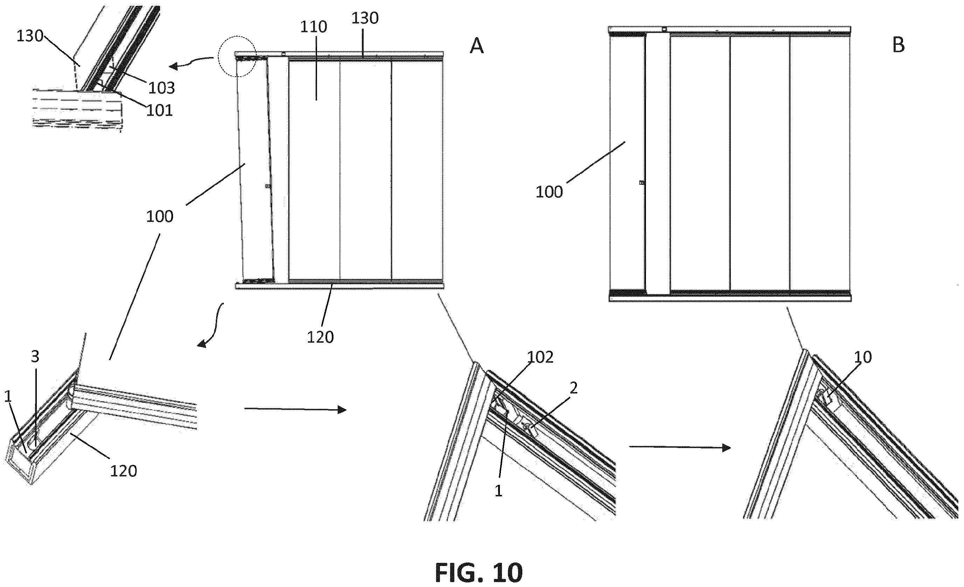

As schematically shown in Figure 10, the door 100 is mounted in the enclosure system in the following manner: the main block 1 is inserted into the U-profile of the lower rail 120 and is fastened thereto by means of a screw or similar which is introduced into hole 6.

Before or after the previous step, the order being indifferent, a standard single-piece hinge block 103 is installed in the U-profile of the upper rail 130. The upper pivot 101 of the door 100 is introduced into the cylindrical hole of the hinge block 103.

Subsequently, the door 100 of the enclosure system is inserted by positioning the lower pivot 102 into the pivot gap 3 of the main block, passing along the cavity 7 for that purpose. After inserting the lower pivot into the gap 3, the retaining block 2 is coupled to the main block 1 by means of, for example, a pressure movement in order to couple the jagged elements 11 and 21 of the main block 1 and the retaining block 2.

And as shown in Figure 3, with the already mounted hinge block 10, the position of the retaining block 2 is locked by means of a screw 5 introduced into a threaded hole 4 of the retaining block, thus preventing the lower pivot 102 of the door 100 from coming loose.

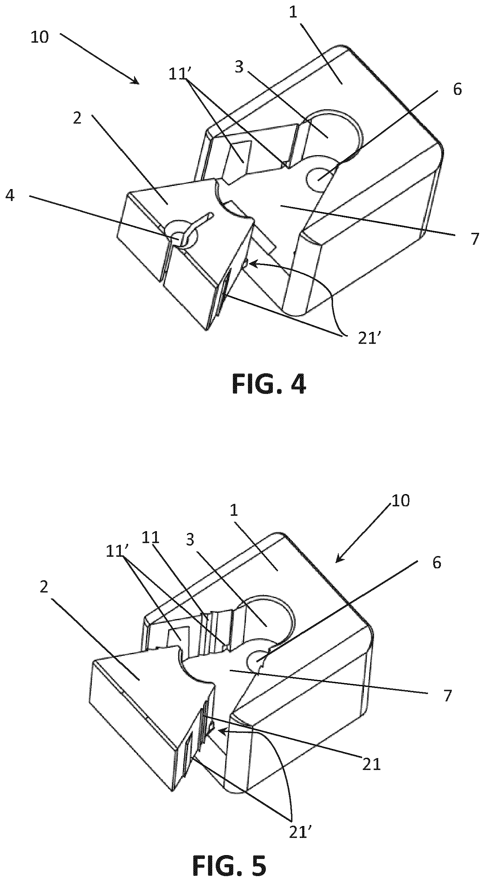

Figures 4 and 5 show a second possible embodiment of the hinge block 10. In this case, the cavity 7 of the main block 1 has a partially triangular shape, in which the retaining block 2, also having a partially triangular shape, is engaged. In this case, the coupling between both blocks is carried out by means of tabs 21' formed on the outer side walls of the retaining block 2, which engage into the notches 11' performed on the inner side walls of the cavity 7 of the main block 1.

This second embodiment is presented with two versions:
- In the case shown in Figure 4, as in the embodiment of Figures 1-2, the fastening between both blocks is secured by means of a screw, which is inserted into the hole 4 of the retaining block 2.
- In the version shown in Figure 5, in addition to the notches 11' and the tabs 21', the side walls of the main block 1 and the retaining block 2 also have jagged elements 11 and 21, respectively, to improve coupling between the blocks. This version therefore needs no fastening screws and the retaining block 2 has no hole for this purpose.

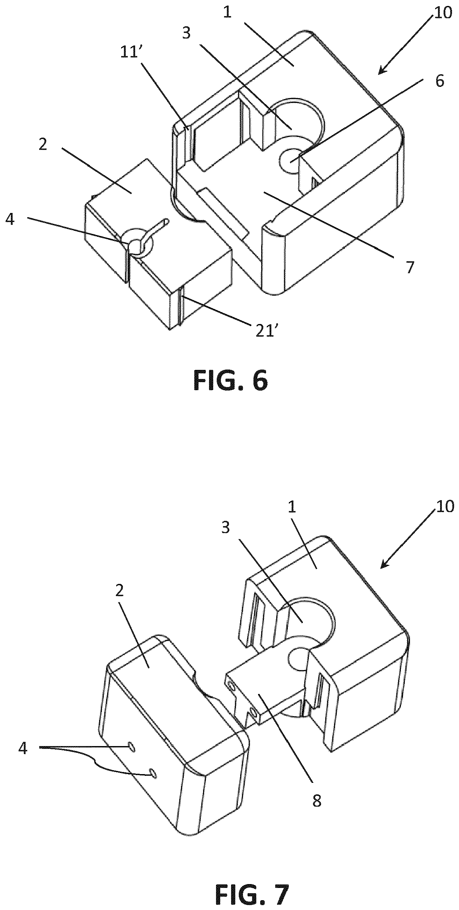

In the case shown in Figure 6, the main block 1 has a cavity 7, with a rectangular shape, in which the retaining block 2, also having a rectangular shape, is coupled. The coupling between both blocks is carried out, just as in the embodiment shown in Figures 4 and 5, by means of tabs 21' in the retaining block 2, which engage on the notches 11' of the main block 1. The fastening between the two is also secured by means of screw or similar, threaded on the hole 4.

In the embodiment of the hinge block 10 shown in Figure 7, the main block 1 has a protruding element 8 that can be coupled by male-female coupling with the corresponding ingoing element (not shown in the Figure) of the retaining block 2. In this embodiment, the fastening between both blocks is also secured by screws or similar fastening elements, which can be inserted into the holes 4.

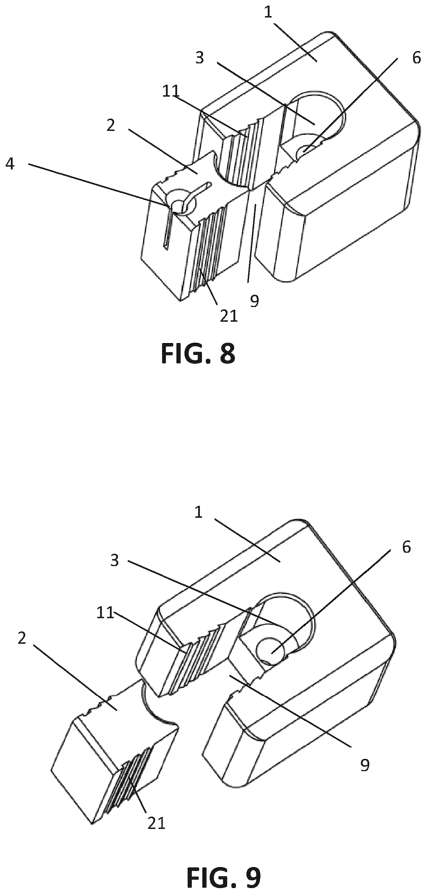

In the embodiment of the hinge block 10 shown in Figures 8 and 9, the main block 1 is also parallelepiped, with a through gap 9 having a shape that is complementary to that of the retaining block 2. As in other embodiments, the coupling between both blocks is carried out by means of jagged elements 11, 21 on the walls of both blocks, said jagged elements being located in complementary fashion so that when both blocks are coupled, the jagged elements face each other. And said coupling is secured by means of a screw or similar fastening element, insertable into the hole 4, in the case of the embodiment shown in Figure 8, not being necessary in the embodiment of the hinge block shown in Figure 9.

As indicated above, Figure 10 shows schematically the mounting of a door of an enclosure system, using the hinge block of the present invention:
- The upper and lower left images of said Figure 10 show the upper rails 130 and lower rails 120 of the enclosure system, respectively. The upper pivot 101 of the door 100 is introduced into the single-piece hinge block 103. And the lower pivot 102 is introduced into the lower rail 120, where the main block 1 has been previously introduced and fastened to the lower rail 120.
- In the lower central image of Figure 10, the lower pivot 102 can be seen already introduced into the gap 3 of the main block 1 (after having slid the door 100 along the lower rail 120), and the retaining block 2 inserted in the lower rail 120.
- In the lower right-hand image of Figure 10 the hinge block 10 formed by the main block 1 and the retaining block 2 can be seen already coupled, supporting the lower pivot 102.
- Images A and B of Figure 10 show the enclosure system before mounting the door (image A) and with the door already mounted (Image B).

Thus, the hinge block of the invention facilitates the mounting of the door in the enclosure system, improving mounting time and the safety of said process.

In this text, the word "comprises" and variants thereof (such as "comprising", etc.) should not be understood in an exclusive sense, i.e. they do not exclude the possibility of that which is described including other elements, steps, etc.

Moreover, the invention is not limited to the specific embodiments described herein, but rather encompasses the variations that one skilled in the art could make (e.g. in terms of choice of materials, dimensions, components, design, etc.), within the scope of the claims.

## Claims

1. A hinge block (10) for a door (100) of an enclosure system, comprising a substantially cylindrical gap (3) for housing a rotation shaft of the door (100), wherein the hinge block comprises:
- a first main block (1) including fastening means for fastening the main block (1) to a lower rail (120) of the enclosure system; and
- a second retaining block (2),
**characterized in that** the first main block (1) comprises a cavity (7), the cavity (7) comprising inner side walls, the cavity (7) allowing the rotation shaft of the door (100) to slide thereon until entering the gap (3), and the second retaining block (2) has a geometry that is complementary to said cavity (7) of the main block (1) except for the gap (3), the first main block (1) and the second retaining block (2) being couplable to each other, and leaving said gap (3) between them in the coupled position, and wherein:
either the first main block (1) comprises a first set of jagged edges (11), and a second set of jagged edges in the second retaining block (2), complementary to the first set of jagged edges (21);
or the first main block (1) and the second retaining block (2) are couplable to each other by male-female coupling (8);
or the second retaining block (2) comprises at least one tab (21') and the first main block (1) comprises at least one notch (11') complementary to said tab (21') or vice versa.

2. The hinge block (10) according to claim 1, **characterized in that** the main block (1) comprises a through gap (9) and the second retaining block (2) has a geometry that is complementary to said through gap (9) of the main block (1) except for the gap (3).

3. The hinge block (10) according to any of claims 1-2, **characterized in that** the second retaining block (2) comprises at least one hole (4), and **in that** coupling between the first main block (1) and the second retaining block (2) is ensured by means of at least one fastening element (5), insertable into said at least one hole (4).

4. The hinge block (10) according to any of claims 1-3, **characterized in that** the fastening means comprise a through hole (6) in the main block (1) for housing a fastening screw for fastening the main block (1) to a lower rail (120) of the enclosure system.

5. An enclosure system comprising a plurality of independent panels (110) and a lower rail (120) and an upper rail (130), and at least one door (100) mounted on the lower rail (120) and the upper rail (130) **characterized in that** the door (100) is mounted on the lower rail and/or on the upper rail by means of at least one hinge block (10) according to any of claims 1-4.

6. The enclosure system of claim 5, wherein the door (100) is mounted on the lower rail by means of a hinge block (10) according to any of claims 1-4.

7. A method for mounting a door (100) of an enclosure system comprising a lower rail (120) and an upper rail (130) by means of at least one hinge block (10) according to any of claims 1-4, **characterized in that** it comprises the following steps:
i) fastening a first hinge block (10, 103) to either the upper rail (130) or the lower rail (120);
ii) fastening the first main block (1) of a second hinge block according to any of claims 1-4 to the other of the lower rail and the upper rail (120,130);
iii) inserting a pivot (101,102) pre-mounted on the door (100) into a hole of the first hinge block (10, 103) fastened in step i);
iv) inserting the other pivot (101,102) pre-mounted on the door in the opposite rail (120,130) where the first main block (1) is fastened, and sliding the door (100) on that rail and on the cavity (7) until that door pivot (102, 101) is housed in the gap (3) of the hinge block;
v) coupling the second retaining block (2) to the first main block (1).

8. The method according to claim 7, wherein the hinge block fastened in step (i) is a single-piece hinge block (103).

9. The method according to claim 8, wherein the hinge block fastened in step (i) is a hinge block (10) according to one of claims 1-4.

10. The method according to any of claims 7-9, wherein steps i) and ii) are carried out in reverse order.

## Patentansprüche

1. Scharnierblock (10) für eine Tür (100) eines Gehäusesystems, umfassend einen im Wesentlichen zylindrischen Spalt (3) zur Aufnahme einer Drehwelle der Tür (100), wobei der Scharnierblock umfasst:
- einen ersten Hauptblock (1), einschließlich Befestigungsmittel zur Befestigung des Hauptblocks (1) an einer unteren Schiene (120) des Gehäusesystems; und
- einen zweiten Halteblock (2),
**dadurch gekennzeichnet, dass** der erste Hauptblock (1) einen Hohlraum (7) umfasst, wobei der Hohlraum (7) innere Seitenwände umfasst, wobei der Hohlraum (7) es der Drehwelle der Tür (100) ermöglicht, darauf zu gleiten, bis eintretend in den Spalt (3), und der zweite Halteblock (2) eine Geometrie aufweist, die ausgenommen für den Spalt (3) komplementär zu dem Hohlraum (7) des Hauptblocks (1) ist, wobei der erste Hauptblock (1) und der zweite Halteblock (2) miteinander koppelbar sind, und der Spalt (3) in der gekoppelten Position zwischen ihnen verbleibt, und wobei:
entweder der erste Hauptblock (1) einen ersten Satz gezackter Kanten (11) und einen zweiten Satz gezackter Kanten in dem zweiten Halteblock (2) aufweist, komplementär zu dem ersten Satz gezackter Kanten (21);
oder der erste Hauptblock (1) und der zweite Halteblock (2) durch eine Steckverbindung (8) miteinander koppelbar sind;
oder der zweite Halteblock (2) wenigstens eine Lasche (21') umfasst und der erste Hauptblock (1) wenigstens eine zu dieser Lasche (21') komplementäre Kerbe (11') oder umgekehrt umfasst.

2. Scharnierblock (10) nach Anspruch 1, **dadurch gekennzeichnet, dass** der Hauptblock (1) einen Durchgangsspalt (9) umfasst und der zweite Halteblock (2) eine Geometrie aufweist, die komplementär ist zu dem Durchgangsspalt (9) des Hauptblocks (1) ausgenommen für den Spalt (3).

3. Scharnierblock (10) nach einem der Ansprüche 1-2, **dadurch gekennzeichnet, dass** der zweite Halteblock (2) wenigstens ein Loch (4) umfasst und dass die Kopplung zwischen dem ersten Hauptblock (1) und dem zweiten Halteblock (2) mittels wenigstens eines Befestigungselements (5) gewährleistet ist, das in das wenigstens eine Loch (4) einsetzbar ist.

4. Scharnierblock (10) nach einem der Ansprüche 1-3, **dadurch gekennzeichnet, dass** die Befestigungsmittel ein Durchgangsloch (6) in dem Hauptblock (1) zur Aufnahme einer Befestigungsschraube zur Befestigung des Hauptblocks (1) an einer unteren Schiene (120) des Gehäusesystems umfassen.

5. Gehäusesystem, umfassend eine Vielzahl unabhängige Platten (110) und eine untere Schiene (120) und eine oberen Schiene (130) und wenigstens eine Tür (100), die an der unteren Schiene (120) und der oberen Schiene (130) montiert ist, **dadurch gekennzeichnet, dass** die Tür (100) an der unteren Schiene und / oder an der oberen Schiene mittels wenigstens eines Scharnierblocks (10) nach einem der Ansprüche 1-4 montiert ist.

6. Gehäusesystem nach Anspruch 5, wobei die Tür (100) mittels eines Scharnierblocks (10) nach einem der Ansprüche 1-4 an der unteren Schiene montiert ist.

7. Verfahren zur Montage einer Tür (100) eines Gehäusesystems, umfassend eine untere Schiene (120) und eine obere Schiene (130), mittels wenigstens eines Scharnierblocks (10) nach einem der Ansprüche 1-4, **dadurch gekennzeichnet, dass** es die folgenden Schritte umfasst:
i) Befestigen eines ersten Scharnierblocks (10, 103) entweder an der oberen Schiene (130) oder an der unteren Schiene (120);
ii) Befestigen des ersten Hauptblocks (1) eines zweiten Scharnierblocks nach einem der Ansprüche 1-4 an der anderen der unteren Schiene und der oberen Schiene (120, 130);
iii) Einsetzen eines an der Tür (100) vormontierten Zapfens (101, 102) in ein Loch des in Schritt i) befestigten ersten Scharnierblocks (10, 103);
iv) Einsetzen des anderen Zapfens (101, 102), vormontiert an der Tür in der gegenüberliegenden Schiene (120, 130), an der der erste Hauptblock (1) befestigt ist, und Verschieben der Tür (100) auf dieser Schiene und in dem Hohlraum (7), bis dieser Türzapfen (102, 101) in dem Spalt (3) des Scharnierblocks untergebracht ist;
v) Kopplung des zweiten Halteblocks (2) mit dem ersten Hauptblock (1).

8. Verfahren nach Anspruch 7, wobei der in Schritt (i) befestigte Scharnierblock ein einteiliger Scharnierblock (103) ist.

9. Verfahren nach Anspruch 8, wobei der in Schritt (i) befestigte Scharnierblock ein Scharnierblock (10) nach einem der Ansprüche 1-4 ist.

10. Verfahren nach einem der Ansprüche 7-9, wobei die Schritte i) und ii) in umgekehrter Reihenfolge durchgeführt werden.

## Revendications

1. Bloc charnière (10) pour porte (100) d'un système d'enceinte, comprenant un espace sensiblement cylindrique (3) pour loger un axe de rotation de la porte (100), le bloc charnière comprenant :
- un premier bloc principal (1) comprenant des moyens de fixation pour fixer le bloc principal (1) à un rail inférieur (120) du système d'enceinte ; et
- un deuxième bloc de retenue (2),
**caractérisé en ce que** le premier bloc principal (1) comprend une cavité (7), la cavité (7) comprenant des parois latérales intérieures, la cavité (7) permettant à l'axe de rotation de la porte (100) de glisser sur celle-ci jusqu'à pénétrer dans l'espace (3), et le second bloc de retenue (2) a une géométrie complémentaire de ladite cavité (7) du bloc principal (1) à l'exception de l'espace (3), le premier bloc principal (1) et le deuxième bloc de retenue (2) pouvant être accouplés l'un à l'autre et laissant ledit espace (3) entre eux dans la position d'accouplement, et :
soit le premier bloc principal (1) comprend un premier jeu de dentures (11), et un deuxième jeu de dentures dans le deuxième bloc de retenue (2), complémentaires au premier jeu de dentures (21) ;
soit le premier bloc principal (1) et le deuxième bloc de retenue (2) peuvent être accouplés l'un à l'autre par un accouplement mâle-femelle (8) ;
soit le deuxième bloc de retenue (2) comprend au moins une languette (21') et le premier bloc principal (1) comprend au moins une encoche (11') complémentaire de ladite languette (21') ou vice-versa.

2. Bloc charnière (10) selon la revendication 1, **caractérisé en ce que** le bloc principal (1) comprend un espace traversant (9) et le deuxième bloc de retenue (2) a une géométrie complémentaire dudit espace traversant (9) du bloc principal (1) à l'exception de l'espace (3).

3. Bloc charnière (10) selon l'une des revendications 1-2, **caractérisé en ce que** le deuxième bloc de retenue (2) comprend au moins un trou (4), et **en ce que** l'accouplement entre le premier bloc principal (1) et le deuxième bloc de retenue (2) est assuré au moyen d'au moins un élément de fixation (5) pouvant être inséré dans ledit au moins un trou (4).

4. Bloc charnière (10) selon l'une des revendications 1-3, **caractérisé en ce que** les moyens de fixation comprennent un trou traversant (6) dans le bloc principal (1) pour loger une vis de fixation pour fixer le bloc principal (1) à un rail inférieur (120) du système d'enceinte.

5. Système d'enceinte comprenant une pluralité de panneaux indépendants (110) et un rail inférieur (120) et un rail supérieur (130), et au moins une porte (100) montée sur le rail inférieur (120) et le rail supérieur (130), **caractérisé en ce que** la porte (100) est montée sur le rail inférieur et/ou sur le rail supérieur au moyen d'au moins un bloc charnière (10) selon l'une quelconque des revendications 1-4.

6. Système d'enceinte de la revendication 5, dans lequel la porte (100) est montée sur le rail inférieur au moyen d'un bloc charnière (10) selon l'une quelconque des revendications 1-4.

7. Procédé de montage d'une porte (100) d'un système d'enceinte comprenant un rail inférieur (120) et un rail supérieur (130) au moyen d'au moins un bloc charnière (10) selon l'une quelconque des revendications 1-4, **caractérisé en ce qu'**il comprend les étapes suivantes :
i) fixer un premier bloc charnière (10, 103) soit au rail supérieur (130) soit au rail inférieur (120) ;
ii) fixer le premier bloc principal (1) d'un deuxième bloc charnière selon l'une quelconque des revendications 1-4 à l'autre du rail inférieur et du rail supérieur (120, 130) ;
iii) insérer un pivot (101, 102) prémonté sur la porte (100) dans un trou du premier bloc charnière (10, 103) fixé à l'étape i) ;
iv) insérer l'autre pivot (101,102) prémonté sur la porte dans le rail opposé (120,130) où le premier bloc principal (1) est fixé, et faire glisser la porte (100) sur ce rail et sur la cavité (7) jusqu'à ce que ce pivot de porte (102, 101) soit logé dans l'espace (3) du bloc charnière ;
v) accoupler le deuxième bloc de retenue (2) au premier bloc principal (1).

8. Procédé selon la revendication 7, dans lequel le bloc charnière fixé à l'étape (i) est un bloc charnière en deux pièces (103).

9. Procédé selon la revendication 8, dans lequel le bloc charnière fixé à l'étape (i) est un bloc charnière (10) selon l'une quelconque des revendications 1-4.

10. Procédé selon l'une quelconque des revendications 7-9, dans lequel les étapes i) et ii) sont réalisées dans l'ordre inverse.
